# EUROPEAN PATENT APPLICATION

(11) **EP 4 242 484 A1**
(43) Date of publication of application: **13.09.2023**
(21) Application number: 22165809.9
(22) Date of filing: 31.03.2022
(51) Int. Cl.: F16C 33/66, F16C 35/04, F16C 19/06

(54) **BEARING RING FOR ROTARY ELECTRIC MACHINE AND CORRESPONDING ROTARY ELECTRIC MACHINE**

(30) Priority: 08.03.2022 BR 102022004252
(71) Applicant: Weg Equipamentos Electricos S.A., 89256-900 Jaragua do Sul - SC (BR)
(72) Inventor: DA SILVA, Julio Cesar, 89252-500 Jaragua do Sul (BR); DE CARVALHO, Thiago Piazera, 89252-090 Jaragua do Sul (BR); MANENTE, João Paulo Corrêa, 89256-120 Jaragua do Sul (BR); NAKIRIMOTO, Eric Koji, 89254-536 Jaragua do Sul (BR)
(74) Representative: Zacco Denmark A/S

(57) **Abstract**

The present invention relates to a bearing ring (100) for a rotary electric machine, forming a single body comprising scrapers (130) protruding radially from an inner region (120) and axially from a radial interface region (140), extending axially from its larger edge (131) and gradually decreasing its height proportionally to an angle (133) until reaching its smaller edge (134), maintaining an axial clearance (122) in relation to the bearing (400). The present invention also relates to a corresponding rotary electric machine provided with a bearing ring (100) of the invention.

## Description

### Field of application

The present invention pertains to the field of rotary electric machines, in particular to rolling bearings, notably to the lubrication of rolling bearings with grease from rotary electric machines.

### Background of the Invention

Rotary electric machines are equipment used for transforming electric energy into mechanical energy, in the case of motors, and for transforming mechanical energy into electric energy, in the case of generators. They consist of essentially four basic structures, which are the housing, stator, rotor, and bearings/covers.

The housing is a static element responsible for integrating the structures of the rotary electric machine.

The stator is the static active (energized) component responsible for driving the magnetic flux to rotate the rotor, in the case of motors, and driving the energy generated by the rotor, in the case of generators, when the rotor is the active (energized) component of the rotary electric machine.

The rotor, in turn, is basically composed of a shaft onto which one or more cages, coils, or permanent magnets are arranged, depending on the construction type and operating principle of the rotary electric machine.

The bearings are the elements responsible for coupling the rotary parts to the static parts of a rotary electric machine, performing, for example, the coupling, bearing, and centralization of the (rotary) rotor in relation to the (static) stator, allowing for relative movement between rotor and stator, as well as transmitting forces therebetween.

It should be noted that, in the context of the present invention, the term bearing refers specially to bearing equipped with rolling elements, commonly called greased rolling bearings, in which the bearings are arranged in cavities of the motor covers and wrapped and internally sealed by bearing rings. The grease is introduced by pressure into the motor cover in a first chamber formed between the cover and the bearing, then passing through the bearing and into a second chamber formed inside the bearing ring, in which the grease usually accumulates in the vicinity of the bearing.

As rotary electric machines operate in a number of different conditions of rotation, mechanical load and temperature, an even distribution of grease is needed to ensure adequate lubrication and sufficient heat exchange to avoid bearing overheating, which can promote lubricant degradation and damage the bearing as a whole.

Therefore, the challenge lies in designing greased rolling bearings equipped with bearing rings that allow for an even distribution of grease loads so as to prevent the accumulation of grease close to the bearings and which are, at the same time, simple to construct and manufacture, optimizing both the use of raw materials and the manufacturing and assembly process.

### State of the Art

There are several solutions in the state of the art aimed at optimizing grease distribution in rolling bearings of rotary electric machines.

An example is patent document JP6637691B2 which discloses and describes a rotary electric machine which, according to its abstract, comprises a grease injection path formed between a bearing, and an end bracket, a grease discharge port in fluid contact with the grease injection path, an annular body having an outer periphery plane rotatably in contact with an inner peripheral surface opposite to an outer periphery of rotor shaft, being interposed by a grease pocket and rotatably in contact with an inner peripheral surface of the shaft through the support hole and a grease scraper extending in a lubricant flow path, which is disposed at the bearing side of the annular body.

The solution proposed by JP6637691B2 makes use of one or more scrapers arranged in a ring intricately fixed to one of the motor covers, which demands a series of additional components, both for fixing the scrapers and the scraper ring and for sealing the assembly, making it a solution that is convoluted and expensive due to the number of components. Furthermore, the scrapers do not protrude from the bearing contact region, which limits grease capture and thus grease distribution. In this solution, the scrapers are thin, blade-shaped barriers, not angled and with straight edges, which act similarly to a straight-blade fan and thus act as a barrier to grease passage during higher rotations, not promoting even grease distribution inside the bearing ring and causing an increase in temperature due to the viscous friction of its surfaces with grease. Another disadvantage of this solution is that the positioning of the scrapers depends on the motor's rotation direction, limiting its flexibility and versatility.

As can be inferred from the above description, there is space and demand for a solution to a greased rolling bearing provided with a bearing ring that overcomes the disadvantages of the state of the art, in particular of bearing rings equipped with integrated scrapers, which allows for an even distribution of the grease loads inside the bearing ring without depending on the electric machine's rotation direction, which are simple to construct and can be applied to the greatest possible number of rotary electric machines with greased rolling bearings, also reducing manufacturing time and optimizing raw material utilization and manufacturing process in relation to its peers in the relevant art.

### Objectives of the Invention

Therefore, one of the objects of the present invention is providing a bearing ring for a rotary electric machine according to the features of claim 1 of the appended set of claims.

Another object of the present invention is providing a rotary electric machine equipped with a bearing ring according to the features of claim 8 of the set of claims.

Additional features and feature details are presented in the dependent claims.

### Brief description of the figures

For a better understanding and visualization of the subject matter, the present invention will now be described with reference to the appended figures, representing the obtained technical effect through an example embodiment without limiting the scope of the present invention, in which, schematically:

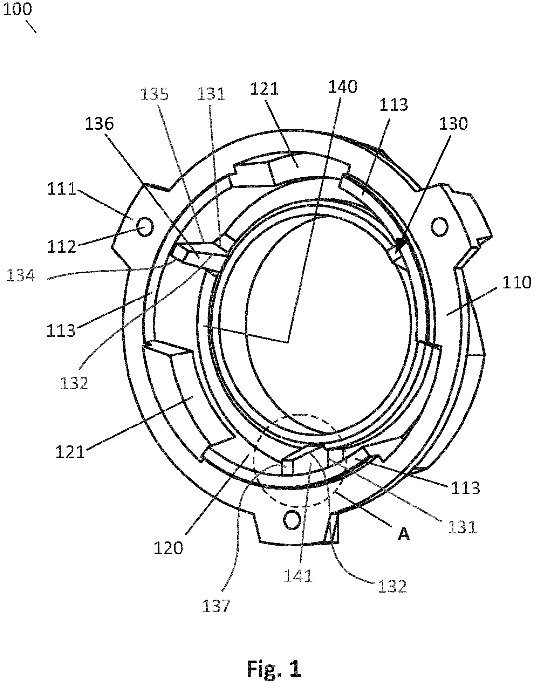

- Figure 1:: shows a perspective view of a bearing ring in accordance with the invention;

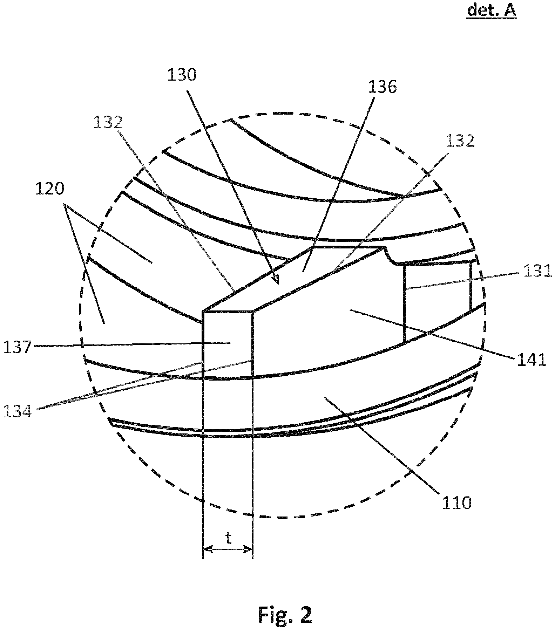

- Figure 2:: shows an enlarged view of detail A from figure 1;

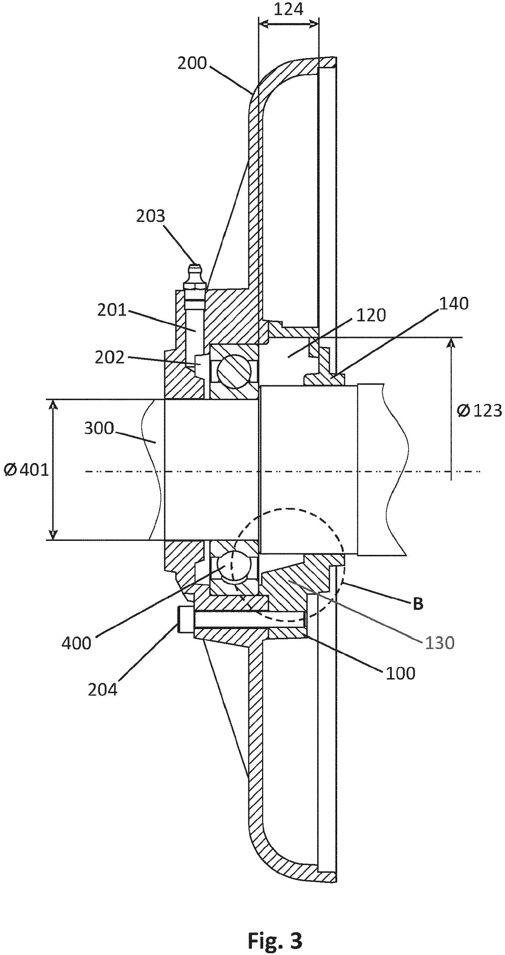

- Figure 3:: shows a side view in partial section of a cover of a rotary electric machine with greased rolling bearing provided with a bearing ring in accordance with the invention; and
- Figure 4:: shows an enlarged side view of detail B from figure 3, showing the scraper position with a shaded area defined by dashed lines for the purpose of improving visualization.

### Detailed Description of the Invention

The present invention relates to a bearing ring (100) for application in rotary electric machines equipped provided with greased rolling bearings, comprising one or more seals or covers (200), at least one rotor shaft (300) and one or more bearings (400).

In a preferred embodiment of the invention, the bearing ring (100) comprises at least one coupling region (110), at least one inner region (120), at least one shear or scraper (130) and at least one radial interface region (140), forming a single body, which, in turn, may consist of one or more sections or parts.

The coupling region (110) comprises shoulders (111) provided with through bores (112) consistent with bores in the cover (200) for the passing of fixing elements (204) to fix the bearing ring (100) to the cover (200), in addition to fitting protrusions (113) which abut the bearing (400) and lock it in working position inside the cover (200).

The inner region (120) is axially adjacent to the coupling region (110) and comprises gaps (121) which disrupt part of the coupling region (110) and are radially adjacent to the fitting protrusions (113), wherein the inner region (120) forms an empty region that is equivalent to the second grease chamber.

The seal or cover (200) houses the bearing (400) and essentially comprises a grease conduction circuit (201) which receives grease under pressure through a grease nozzle or grease nipple (203) which flows into a first grease chamber (202), which is annular and has direct fluidic contact with the bearing (400).

The grease fed by pressure advances through the races and rolling elements of the bearing (400), entering the second grease chamber formed by the inner region (120), in direct fluidic contact with the bearing (400) on the opposite side of the first chamber, whereby the grease in the inner region (120) usually accumulates in the region close to the bearing (400).

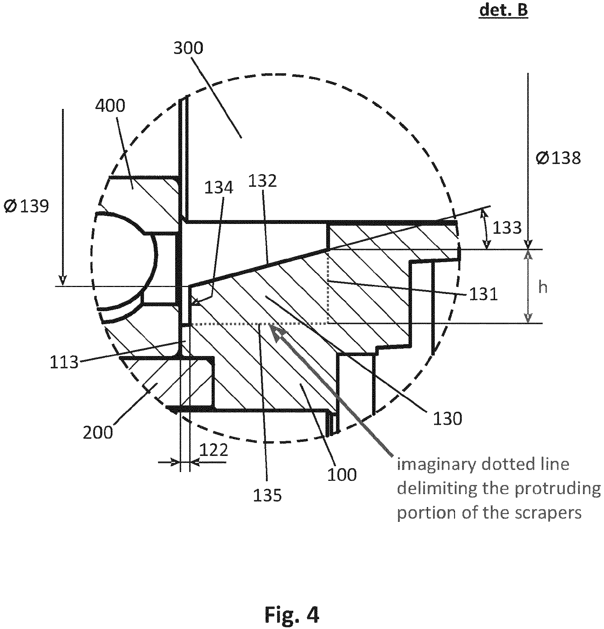

The shears or scrapers (130) are radial protrusions with thickness (t), preferably constant, prismatic-shaped, preferably quadrangular and preferably irregular, comprising larger edges (131), further away from the bearing (400), inclined edges (132) which form an angle (133) in relation to the plane of the rotor shaft (300), smaller edges (134), closer to the bearing (400) and bottom edges (135), as especially seen in figure 4, in which the location of a scraper (130) is represented by a shaded area defined by dashed lines. The thickness (t) value is equivalent to a value between 1% and 50%, preferably between 2% and 40% and more preferably between 3% and 20% of the inner diameter (401) of the bearing (400).

The angle (133) ranges between 0° and 60°, preferably between 5° and 40° and more preferably between 10° and 20°. Note that this variation in the angle (133) can be obtained be varying the larger edge (131) and/or the smaller edge (134).

Note that the scrapers (130) can also be a triangular prismatic solid, wherein the smaller edge (134) and consequently the front face (137) will not exist. Note also that the scrapers (130) can be a rectangular prismatic solid, wherein the angle (133) will have a value of 0° and/or the vertical measures of the larger edges (131) will be equal to the vertical measures of the smaller edges (134).

The ends of the larger edges (131) form a smaller diameter (138), while the ends of the smaller edges (134) form a larger diameter (139), wherein the measure of the smaller diameter (138) corresponds to a value between 50% and 99%, preferably between 70% and 95% of the value of the larger diameter (139) and the measure of the smaller diameter (138) corresponds to a value between 70% and 90%, preferably between 75% and 85% of the value of the larger inner diameter (123) of the inner region (120) and finally, the measure of the largest diameter (139) corresponds to a value between 70% and 100%, preferably between 85% and 95% of the value of the larger inner diameter (123).

The scrapers (130) protrude radially from the inner region (120) and axially from the radial interface region (140), having four unrestrained faces: an inclined face (136), a front face (137) and two side faces (141), extending axially from its larger edge (131) along the length of the inner region (120), gradually decreasing its height in proportion to the angle (133) until reaching the smaller edge (134) consistent with the edge of the inner region (120) or even ending just before the edge, yet always maintaining an axial clearance (122) in relation to the bearing (400) which preferably corresponds to the axial dimension of the fitting protrusions (113).

The axial clearance (122) must be minimal and sufficient so as to allow only fluid contact between the grease and the bearing (400) in the region of the front face (137) and ensure that the front face (137) does not abut the bearing cage (400) or collide therewith. The axial dimension of the axial clearance (122) is equivalent to a value between 1% and 50%, preferably between 2% and 25% of the axial measure of the bottom edge (135). The scrapers (130) thus protrude as close as possible to the vicinity of the contact region with the bearing (400), which increases the volume of grease moved by the scrapers (130).

As it has two identical side faces (141), the operation of the scrapers (130) of the bearing ring (100) of the invention is independent of the rotation direction of the rotor shaft (300).

The edges between the unrestrained faces (136, 137, 141) can be straight with sharp corners, rounded, or even combined.

The inclined edges (132) and therefore the inclined faces (136) are preferably straight, however they can also be convex or concave or alternatively convex and concave along their length.

In addition, the axial measure (124) or the depth of the inner region (120) corresponds to a value of at least 5%, preferably greater than 15% of the value of the larger inner diameter (123), which guarantees a grease volume suitable for every application and geometry.

The radial interface region (140) is in turn axially adjacent to the inner region (120) and has an annular opening at its end with an inner diameter of sufficient measure so as to allow the passage of the rotor shaft (300).

The outer perimeter of the rotor shaft (300) together with the larger inner diameter (123) and the radial interface region (140) of the inner region (120) define the volume of the second chamber.

The ideal conditions for lubrication and cooling thus are formed, as the scrapers (130) are radial, protruding from a region close to the bearing (400) with an angulation (133) increasing in the direction opposite to the bearing (400) combined with the inner dimensions of the bearing ring (100) provide conditions to impose shear stress on the lubricating fluid or grease, promoting viscous tapping and grease distribution throughout the inner region (120), preventing grease accumulation in the vicinity of the bearing (400), decreasing the hot bearing effect to satisfactory levels.

Note also that the scrapers (130) can be a polygonal prismatic solid with more than four edges, which also increases the number of unrestrained faces that contact the grease, depending on the design demands and application conditions and operation.

Note that the scrapers (130) can also have a variable thickness (t) regardless of shape, increasing or decreasing axially towards the bottom of the bearing ring (100) and/or increasing or decreasing radially towards the center of the rotor shaft (300).

In another embodiment of the present invention, the bearing ring (100) consists of two or more sections or parts which can be singular or modular or even a combination of singular and modular elements, yet always forming a single body.

In yet another embodiment of the present invention, the bearing ring (100) may be the preexisting ring of a rotary electric machine provided with one or more scrapers (130) of the invention radially disposed therein.

Finally, a rotary electric machine according to the invention is an electric motor provided with a bearing ring (100) in accordance with the invention.

### Conclusion

It will be easily understood by those skilled in the art that modifications can be made to the present invention without departing from the concepts set out in the description above. Such modifications should be considered as comprised by the scope of the present invention. Consequently, the particular embodiments previously described in detail are illustrative and exemplary only and are non-restrictive as to the scope of the present invention, to which the full extent of the appended set of claims and any and all correspondents thereof should be given.

## Claims

1. Bearing ring (100) for a rotary electric machine, **characterized in** the bearing ring (100) forming a single body comprising:
- a peripheral wall (120),
- a base (140) and
- protrusions (130) protruding radially inwardly from said peripheral wall (120) and extending in an axial direction of said bearing ring (100) from said base (140),
- said radial protrusions (130) each having an inclined front face (136) defining a height (h) of said protrusions (130) measured between said inclined front face (136) and said peripheral wall (120),
- said height (h) gradually decreasing in said axial direction, from said base (140) to a respective end face (137) of said protrusions (130),
- said bearing ring (100) being configured to be coupled to a bearing (400) with said end faces (137) being oriented towards said bearing (400) and maintaining a clearance (122) in relation to said bearing (400) in said axial direction,
- said protrusions (130) defining scrapers imposing shear stress on a fluid lubricating said bearing (400).

2. Bearing ring according to claim 1, **characterized in that** said height (h) gradually decreases in said axial direction, proportionally to an angle (133) between said inclined front face (136) and said axial direction, said angle (133) ranging between 0° and 60°, preferably between 5° and 40° and more preferably between 10° and 20°.

3. Bearing ring according to claim 1, **characterized in that** said clearance (122) is equivalent to a value between 1% and 50%, preferably between 2% and 25%, of the length of the edge (135) of said radial protrusions (130) along said peripheral wall (120), measured between said base (140) and said end face (137).

4. Bearing ring according to claim 1, **characterized in that** said single body is made from one or more sections or parts.

5. Bearing ring according to claim 1, **characterized in that** said radial protrusions (130) are preferably prismatic-shaped and preferably constant radial protrusions (130) having a thickness (t) between opposite side faces (141) of said protrusions (130).

6. Bearing ring, according to claim 5, **characterized in that** said thickness (t) value is equivalent to a value between 1% and 50%, preferably between 2% and 40% and more preferably between 3% and 20% of an inner diameter (401) of said bearing (400) to which the bearing ring (100) is coupled.

7. Bearing ring according to claim 1, **characterized in that** said peripheral wall (120) comprises gaps (121) which disrupt part of a coupling flange (110) and are radially adjacent to fitting protrusions (113).

8. Bearing ring according to claim 1, **characterized in that** the measure of a smaller diameter (138) of the radial protrusions (130) corresponds to a value between 70% and 99%, preferably between 80% and 95% of the value of a larger diameter (139) of the radial protrusions (130), and the measure of the smaller diameter (138) corresponds to a value between 70% and 90%, preferably between 75% and 85% of the value of a larger inner diameter (123) of said peripheral wall (120), wherein the measure of the larger diameter (139) corresponds to a value between 80% and 100%, preferably between 85% and 95% of the value of the larger inner diameter (123).

9. Rotary electric machine, **characterized in that** it comprises one or more bearing rings (100) defined in any one of claims 1 to 8.

10. A bearing assembly (200) for a rotary electric machine with a rotor shaft (300) having an axis of rotation, said assembly including:
- a bearing (400) with rolling elements and a bearing ring (100) coupled to said bearing (400),
- a first grease chamber (202) on a first side of said bearing (400) communicating with a second grease chamber defined between an opposite, second side of said bearing (400) and said bearing ring (100),
- said bearing ring (100) forming a single body comprising a peripheral wall (120), a base (140) and protrusions (130) protruding radially inwardly from said peripheral wall (120) and extending in an axial direction of said assembly (200) from said base (140),
- said protrusions (130) defining scrapers imposing shear stress on grease in said second grease chamber in use of said assembly (200),
- said protrusions (130) each having an inclined front face (136) oriented towards said second grease chamber and defining a height (h) of said protrusions (130) measured between said inclined front face (136) and said peripheral wall (120),
- - said height (h) gradually decreasing in said axial direction, from said base (140) to a respective end face (137) of said protrusions (130), and
- a clearance (122) in said axial direction between said bearing (400) and said respective end faces (137) ensuring that said end faces (137) do not collide with said bearing (400).

11. The cover assembly of claim 10, **characterized in** said height (h) gradually decreasing in said axial direction, proportionally to an angle (133) between said inclined front face (136) and said axial direction, from said base (140) to a respective end face (137) of said protrusions (130), said angle (133) ranging between 0° and 60°, preferably between 5° and 40° and more preferably between 10° and 20°.
